# EUROPEAN PATENT APPLICATION

(11) **EP 2 280 334 A2**
(43) Date of publication of application: **02.02.2011**
(21) Application number: 10171404.6
(22) Date of filing: 30.07.2010
(51) Int. Cl.: G06F 3/041

(54) **Calibration of interactive whiteboard**

(30) Priority: 31.07.2009 GB 0913449
(71) Applicant: Promethean Limited, Blackburn Lancashire BB1 5TH (GB)
(72) Inventor: Joscelyne, Ian, Blackburn, Lancashire BB1 5TH (GB)
(74) Representative: Williams, David John

(57) **Abstract**

There is disclosed a method for establishing calibration in an interactive display system comprising an interactive display surface and a projector for projecting images onto the interactive display surface, the system being adapted for connection to a computer to receive display data from the computer for display on the interactive display surface via the projector, the method comprising the steps of: a. determining the display parameters of the interactive display system; b. accessing stored calibration data; c. determining if any stored calibration data is associated with display parameters matching the determined display parameters of the interactive system; and d. in dependence on a match, retrieving and applying the calibration data to thereby calibrate the computer with the interactive display system.

## Description

### Field of the Invention:

The present invention relates to the calibration of a display part of an interactive display system with a control part of such system. Such an interactive display system is one incorporating an interactive display surface.

### Description of the Related Art:

A typical example of an interactive display system is an electronic whiteboard system. An electronic whiteboard system typically is adapted to sense the position of a pointing device or pointer relative to a work surface (the interactive display surface) of the whiteboard, the work surface being an interactive surface. When an image is displayed on the work surface of the whiteboard, and its position calibrated, the pointer can be used in the same way as a computer mouse to manipulate objects on the display by moving a pointer over the surface of the whiteboard.

A typical application of an interactive whiteboard system is in a teaching environment. The use of interactive whiteboard systems improve teaching productivity and also improve student comprehension. Such whiteboards also allow use to be made of good quality digital teaching materials, and allow data to be manipulated and presented using audio visual technologies.

A typical construction on an electronic whiteboard system comprises an interactive display surface forming the electronic whiteboard, a projector for projecting images onto the display surface, and a computer system in communication with the electronic whiteboard for generating the images for projection, running software applications associated with such images, and for processing data received from the display associated with pointer activity, such as the location of the pointer on the display surface. In this way the computer system can control the generation of images to take into account the detected movement and actions of the pointer on the interactive surface.

It is well-known in the art of interactive display systems that there is a need to calibrate the images displayed on the interactive display surface. It is well-known that a calibration routine must be carried out before an interactive display system can be used. Such a calibration routine allows the computer system to calibrate the display of images on the screen with the position of a pointing device, to ensure that the detection of the position of the pointing device can be accurately mapped to the displayed image at that position.

Examples of calibration in prior art interactive display systems can be found in U.S. Patent No. 7,289,113; U.S. Patent Application Publication No. 2009/0002344; U.S. Patent No. 7,432,917; U.S. Patent Application Publication No. 2006/0007170; and European Patent Application Publication No. 1607853.

Various techniques for calibration of interactive display systems are thus known in the art.

One disadvantage with typical prior art calibration techniques is that there is a need to carry out a calibration sequence each time a change to the system configuration causes the correlation between the displayed image and the interactive surface to alter. This may occur, for example, in a fixed system when a different computer is connected to the system or if different display resolutions are selected. In a non-fixed system, calibration may be required more frequently. Here, the term fixed system is used to refer to a system in which the positional or geometric relationship between the projector and the display screen is fixed.

The need to calibrate can be frustrating for the system user. The need to calibrate also delays the start of intended applications, typically whilst an audience is waiting.

It is an aim of the invention to provide an improved technique for calibrating an interactive display system.

### SUMMARY OF THE INVENTION:

In one aspect the invention provides a method for establishing calibration in an interactive display system comprising an interactive display surface and a projector for projecting images onto the interactive display surface, the system being adapted for connection to a computer to receive display data from the computer for display on the interactive display surface via the projector, the method comprising the steps of: a. determining the display parameters of the interactive display system; b. accessing stored calibration data; c. determining if any stored calibration data is associated with display parameters matching the determined display parameters of the interactive system; and d. in dependence on a match, retrieving and applying the calibration data to thereby calibrate the computer with the interactive display system.

The steps a. to d. may be performed in a connection sequence following connection of a computer to the interactive system. The steps a. to d. may be performed in response to a change in display parameters of the interactive display system.

The method may further comprise the steps, in dependence on no match, of: e. determining the stored calibration data associated with display parameters most closely matching the determined display parameters of the interactive display system; f. retrieving the calibration data; g. modifying the calibration data; and h. applying the modified calibration data. The method may further comprise the step, in dependence on no match, of: i. calibrating the interactive display system. The method may further comprise the step of: j.
storing the calibration information in association with the display parameters of the interactive display system.

The display parameters of the interactive display system may include the geometric parameters of the system. The display parameters of the interactive display system may include the display parameters of the computer system.

The step b. of accessing stored calibration data may comprise accessing a memory associated with the interactive surface. The step b. of accessing stored calibration data may comprise accessing a memory remote from the interactive surface.

The interactive surface may be an electronic whiteboard.

The invention also provides a method for establishing calibration in an interactive display system comprising an interactive display surface and a projector for projecting images onto the interactive display surface, the system being adapted for connection to a computer to receive display data from the computer for display on the interactive display surface via the projector, the method comprising the steps of: a. calibrating the system; b. determining the display parameters of the interactive display system; and c. storing the calibration data in association with the display parameters of the interactive display system.

Steps a. to c. may be performed in a connection sequence following connection of a computer to the system. Steps a. to c. may be performed in response to a change in the display parameters of the interactive display system.

On determination of a change in the computer display parameters, method may further comprise the steps of: d. determining the new computer display parameters; e. accessing the stored calibration data; f. determining if the stored calibration data is associated with system display parameters matching current system display parameters including the new computer display parameters; and g. in dependence on a match, retrieving and applying the calibration data to thereby calibrate the computer with the interactive display system.

The determination of a change may be responsive to connection of a new computer to the system. The determination of a change may be responsive to a change in the settings of the current computer.

The step c. of storing calibration data may comprise accessing a memory associated with the interactive surface. The step c. of storing calibration data may comprise accessing a memory remote from the interactive surface.

The interactive surface is preferably a whiteboard.

The invention further provides a computer for connection to an interactive display system comprising an interactive display surface and a projector for projecting images onto the interactive display surface, the computer being adapted to provide display data for controlling the display of images on the interactive display surface via the projector, the computer further being adapted to calibrate the interactive display system, the computer being adapted to: a. determine the display parameters of the interactive display system; b. access stored calibration data; c. determine if any stored calibration data is associated with display parameters matching the determined display parameters of the interactive system; and d. in dependence on a match, retrieve and apply the calibration data to thereby calibrate the computer with the interactive display system.

The computer may be adapted to detect connection of the computer to the interactive system, and thereby enable the calibration of the interactive display system.

The computer may be adapted to detect a change in display parameters of the interactive display system, and thereby enable the calibration of the interactive display system.

The computer may be further adapted, in dependence on no match, to: e. determine the stored calibration data associated with display parameters most closely matching the determined display parameters of the interactive display system; f. retrieve the calibration data; g. modify the calibration data; and h. apply the modified calibration data.

The computer may further be adapted, in dependence on no match, to: i. calibrate the interactive display system.

The computer may be further adapted to: j. store the calibration information in association with the display parameters of the interactive display system.

The display parameters of the interactive display system may include the geometric parameters of the system. The display parameters of the interactive display system may include the display parameters of the computer system.

The computer may be further adapted to access stored calibration data by accessing a memory associated with the interactive surface. The computer may be further adapted to access stored calibration data by accessing a memory remote from the interactive surface.

An electronic whiteboard system may include a computer as defined.

The invention also provides a computer for connection to an interactive display system comprising an interactive display surface and a projector for projecting images onto the interactive display surface, the computer being adapted to provide display data for controlling the display of images on the interactive display surface via the projector, the computer further being adapted to: a. calibrate the system; b. determine the display parameters of the interactive display system; and c. store the calibration data in association with the display parameters of the interactive display system.

The computer may further be adapted to calibrate the system responsive to the computer to the system. The computer may further be adapted to calibrate the system responsive to a change in the display parameters of the interactive display system.

The computer may be further adapted, on determination of a change in the computer display parameters, to: d. determine the new computer display parameters; e. access the stored calibration data; f. determine if the stored calibration data is associated with system display parameters matching current system display parameters including the new computer display parameters; and g. in dependence on a match, retrieve and apply the calibration data to thereby calibrate the computer with the interactive display system.

The determination of a change may be responsive to connection of the computer to the system. The determination of a change may be responsive to a change in the settings of the current computer.

The computer may be further adapted to store calibration data by accessing a memory associated with the interactive surface. The computer may be further adapted to store calibration data by accessing a memory remote from the interactive surface.

An electronic whiteboard system may include a computer as defined.

### BRIEF DESCRIPTION OF THE FIGURES:

The invention will now be described by way of example with reference to the accompanying figures, in which:
Figure 1 illustrates the main elements of a typical known example interactive display system;
Figure 2 illustrates a process flow for implementing a calibration scheme in a controller of an interactive display system in accordance with embodiments of the invention;
Figure 3 illustrates schematically the functional blocks of a controller of an interactive display system for implementing the process of Figure 2 in an embodiment of the invention;
Figure 4 illustrates a process flow for implementing a calibration sequence in a controller of an interactive display system in accordance with an example; and
Figures 5a to 5d illustrate example images displayed on an interactive display surface in accordance with the example calibration sequence of Figure 4.

### DESCRIPTION OF THE PREFERRED EMBODIMENTS:

The invention is now described by way of reference to various examples, embodiments, and advantageous applications. One skilled in the art will appreciate that the invention is not limited to the details of any described example, embodiment or implementation. In particular the invention is described with reference to an exemplary interactive display system and with reference to an exemplary calibration sequence. One skilled in the art will appreciate that the principles of the invention are not limited to such a described system or sequence.

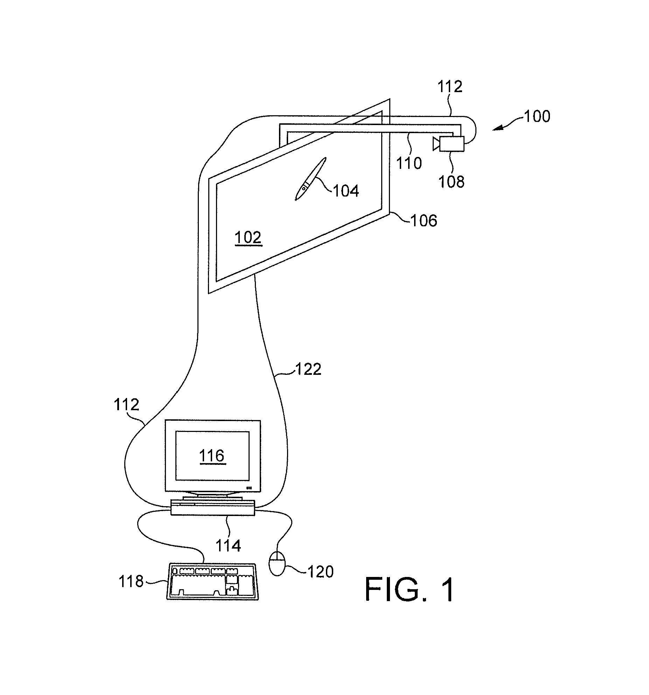

With reference to Figure 1, an exemplary interactive display system 100 comprises: a whiteboard assembly arrangement generally designated by reference numeral 106, and including an interactive display surface 102; a projector 108; and a computer system 114. The projector 108 is attached to a fixed arm or boom 110, which extends in a direction perpendicularly from the surface of the whiteboard 106. One end of the boom 110 supports the projector 108 in a position in front of the interactive display surface 102, and the other end of the boom 110 is fixed to the whiteboard 106 or near the whiteboard, such as a frame associated with the whiteboard 106, or a wall on which the whiteboard 106 is mounted.

The computer 114 controls the interactive display system. A computer display 116 is associated with the computer 114. The computer 114 additionally is provided with a keyboard input device 118 and a mouse input device 120. The computer 114 is connected to the whiteboard 106 by a communication line 122 to receive data from the interactive display surface 102, and is connected to the projector 108 by a communication link 112 in order to provide display images to the projector 108. Although in Figure 1 these are shown as wired connections, they may be also implemented as wireless connections.

Shown in Figure 1 is a pointing device 104, which is used to provide inputs at the interactive display surface 102. In other interactive display systems the interactive display surface 102 may be a touch-sensitive surface, and inputs provided at the interactive display surface by touch using a finger. Various technologies exist for detecting the position of a pointing device (such as a pen or finger) at the interactive surface, which additionally include camera position detection technology. The invention encompasses all such technologies and is generally applicable to interactive display surfaces.

As is known in the art, the computer 114 controls the interactive display system to project images via the projector 108 onto the interactive display surface 102. The position of the pointing device 104 is detected by the interactive display surface 102, data returned to the computer 114, and location information determined by the computer 114. The pointing device 104 operates in the same way as a mouse to control the displayed images.

As is known in the art, there is a necessity to calibrate the position of the pointing device 104 with the displayed images. This allows the accurate calibration of a displayed image with a pointing device input, to ensure that the input information from the pointing device 104 is accurately aligned with the displayed information. In practice, a certain offset needs to be applied to the coordinates associated with the pointing device input location, in order to map to the displayed images accurately. This offset compensates, for example, for keystone deficiencies as is well-known in the art. As is also well-known in the art, typically a calibration sequence is enabled on start-up of the system, to calibrate the displayed images prior to running a software application on the computer system 114.

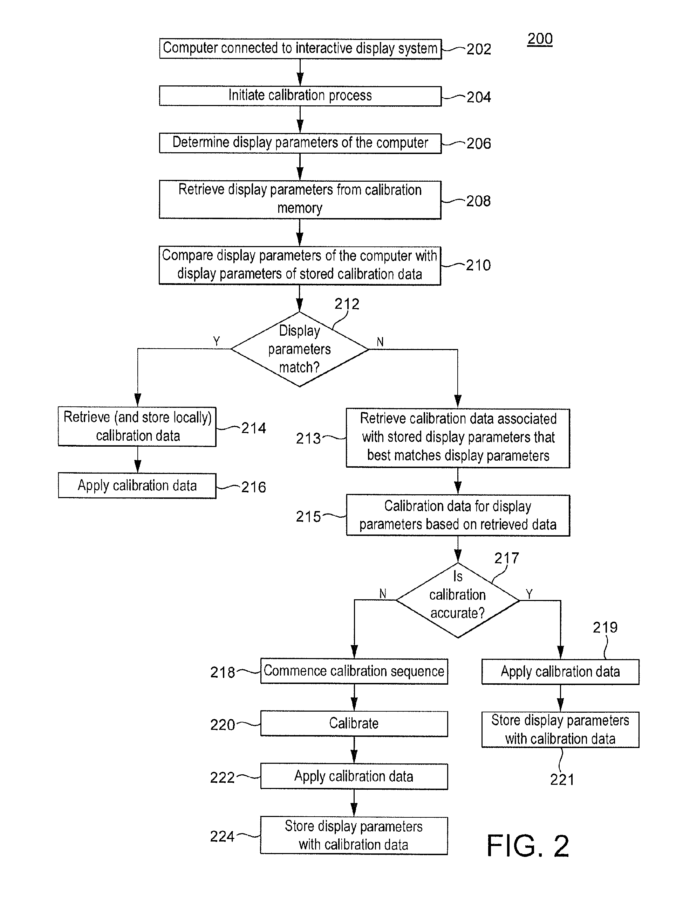

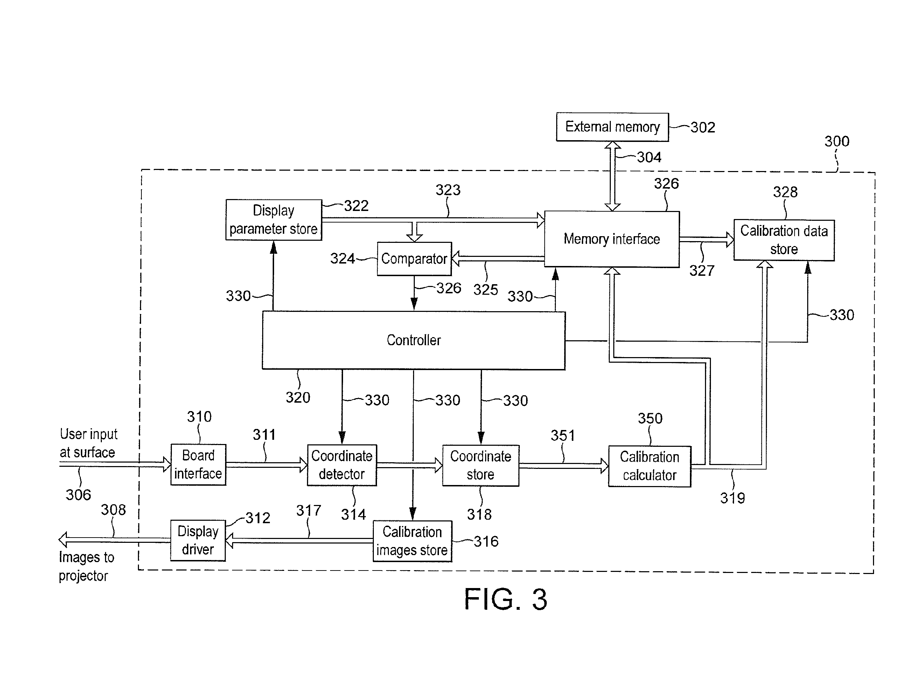

In accordance with the invention, a modified calibration operation takes place in the computer system 114. A process flow describing this modified calibration operation is set out in Figure 2. Further in Figure 3 there is illustrated the main functional elements of the computer system 114 for enabling the functionality of the calibration sequence in accordance with the invention and its embodiments.

The computing functionality provided by computer 114 may be provided by any computing means capable of controlling the functionality of the interactive display system. This may include desktop and laptop computers, but may also include other portable computing devices. The computing functionality may also be implemented in computer circuitry provided integral to the electronic whiteboard 106 itself.

As illustrated in Figure 3, the main functional elements 300 of the computer system 114 for enabling the functionality of the invention and its embodiments include a controller 320, a board interface 310, a display driver 312, a memory interface 326, a display parameter store 322, a calibration data store 328, a calibration images store 316, a coordinate detector 314, a coordinate store 318, a comparator 324, and a calibration calculator 350.

The controller 320 generates various control signals 330. Various control signals 330 connected to various functional elements are shown in Figure 3. These signals may form part of a control bus to which the functional elements are commonly connected.

Also illustrated in Figure 3 is an external memory 302, for storing calibration data. The external memory 302 is provided in a preferred embodiment of the invention. Alternatively the storage capability provided by the external memory 302 may be provided within the computer 114. Alternatively the memory may be provided on a device to which the computer 114 may interface with, such as a memory stick, or on the electronics associated with the electronic whiteboard 106. The external memory may be accessed directly or via a network. The external memory may be accessed wirelessly. The only necessary characteristic of the memory 302 is that it must be accessible to the functional circuitry 300 of the computer 114.

The memory 302 is a calibration data memory. It stores one or more sets of calibration data for one or more sets of display parameters of the interactive display system. The term display parameters of the interactive display system, or display parameters of the system, is used herein to refer to the display parameters of the computer (or computer display parameters) which generates images for display on the interactive surface, and the geometric parameters of the interactive display system itself. The computer display parameters refer to display characteristics of the computer system controlling the images displayed on the display surface, which characteristics include, for example, screen resolution. The geometric parameters of the interactive display system refer to the parameters associated with the physical arrangement of the projector and display surface. The geometric parameters include, for example, the distance between the projector and the display surface, and the angle of the projector axis.

In a preferred arrangement, and in most practical arrangements, the geometric parameters are fixed for a given interactive display system, and the only varying factor is the display parameters of the computer as different computers are connected to the system. In practice it would not be expected, following installation of the system, that the distance between the projector and the screen, or the angle of the projector axis, would be varied. However one may envisage an arrangement where the projector is movable in a direction perpendicular to the screen between a number of defined positions, or is movable to adjust the projection axis between a number of discrete positions. In such cases the associated geometric parameters may be stored with the display parameters of the computer using the techniques discussed below.

The display parameters of the computer system are known to the computer system. These parameters may include any settings in the computer system which affect the displayed image, such as aspect ratio, screen resolution etc. The geometric parameters of the system are not known to the computer system, and are provided to it. This may involve the user of the system entering these parameters in the computer. The geometric parameters of the system include any parameters of the system - specifically its physical arrangement - which affect the displayed image. Preferably the geometric parameters are fixed, and only computer display parameters are used for the system display parameters.

In general, for a given set of display parameters of the interactive display system, one set of calibration data is required. Thus once the calibration data has been determined once, it can be used in any interactive display system which incorporates the same system display parameters. More specifically for an interactive display system with a fixed geometric arrangement, once the system has been calibrated once for a given set of computer display parameters, it can be used for any computer system connected to the interactive display system which has the same computer display parameter settings.

Thus in accordance with embodiments of the invention, the memory 302 stores one or more sets of calibration data mapped to one or more sets of computer display parameters. As described in further detail hereinabove, in accordance with embodiments of the invention, if the memory stores a set of calibration data for a set of computer display parameters matching the computer display parameters of a computer connected to the interactive system, that set of calibration data is used and no calibration sequence is required.

The stored calibration data 302 preferably includes a table for storing in rows sets of calibration data in conjunction with computer display parameters. The computer display parameters of a currently connected computer may be used to "look-up" the table in the memory 302 to retrieve the stored calibration data in memory 302 associated with the computer display parameters of the currently connected computer. Thus the computer display parameters may be applied to the look-up table in memory 302, and associated calibration data retrieved.

With reference now to Figure 2, the illustrated process 200 describes the calibration operation in accordance with a preferred embodiment of the invention.

In a step 202 the computer 114 is connected to the interactive display system 100. This may involve connecting the communication wires 112 and 122 to the computer 114. It will be understood by one skilled in the art that the electronic whiteboard 106 with integrated projector may be connected to any computer system, such as computer system 114. Although the connections between the computer system and the integrated projector system of Figure 1 are shown as wire connections, they may alternatively be implemented as wireless connections.

In a preferred embodiment the calibration process in accordance with embodiments of the invention is initiated automatically. In alternative arrangements, a user may initiate the calibration sequence by selecting a system option. In addition, the calibration process is not limited to implementation on power-up and at the start of operation. The calibration process may be implemented at any time by user intervention, or automatically for example if a change in computer display parameters is detected. The computer system may continually monitor to detect a change in computer display parameters.

In a step 204 a calibration process is then initiated by the computer 114 once the computer is connected in the interactive display system.

In accordance with the preferred embodiment of the invention, in an initial step of the calibration process 206 the computer 114 determines the computer display parameters. Thus the controller 320 initiates a control signal to the display parameter store 322, responsive to which the display parameters of the computer system are output on signal lines 323 and provided as inputs to the comparator 324 and the memory interface 326.

The controller 320 issues a control signal 330 to the memory interface 326, and under the control of the controller 320 in step 208 the computer display parameters in rows of the table stored in the memory 302 are retrieved in sequence on the interface 304 and delivered to the memory interface 326 on signal lines 304, which in turn delivers the retrieved computer display parameters on communication lines 325 to the second input of the comparator 324.

In a step 210, successive comparisons are made between the computer display parameters retrieved from the display parameter store 322 and the one or more computer display parameters in a column of the table stored in the memory 302 and presented on communication lines 325.

The comparator 324 then compares the retrieved computer display parameters on lines 325 with the computer display parameters of the computer 114 on lines 323 retrieved from the display parameter store 322 as denoted by step 212, and provides a match signal on line 326 to the controller in the event of a comparison match. The signal on line 326 is set responsive to a match. Under the control of the controller 320, all computer display parameters in the appropriate column of the table stored in the memory 302 are preferably retrieved and compared in the comparator 324, until a match is met or until all entries have been compared.

Thus in step 212 the controller 320 monitors the match signal on 326 for a positive result. In the event of a match, then in a step 214 the controller 320 controls the memory interface 326 via control line 330 to retrieve from the stored calibration data 302 the calibration data associated with the computer display parameters causing the match. That is, the calibration data in the same row as the display parameters causing the matches retrieved on the interface 304 to the memory interface 326 is retrieved. Under the control of the controller 320 and control signals 330 the retrieved calibration data is preferably stored locally via communication lines 327 in the calibration data store 328.

In alternative arrangements, the calibration data may not be retrieved and stored locally. The computer system may continue to access the memory 302 during operation when access to the calibration data is required.

Thereafter, in the preferred arrangement, the calibration data stored in the store 328 is applied, in step 216, as the calibration data for the computer system, and there is no requirement for a specific calibration process to be implemented prior to use of the interactive display system.

One skilled in the art will appreciate that the process of steps 202 to 216 may be implemented without visibility to a system user. Thus this calibration process may be initiated automatically and without requiring user input, whenever a computer is connected to the display system or whenever the computer system detects that its display parameters have been changed.

If in step 212 it is determined that no display parameters match the display parameter in the display parameter store 322, after accessing all display parameters stored in the memory 302, then the process moves on to step 213.

In an embodiment of the invention, following a negative assessment in step 212 then in a step 213 the computer system retrieves the calibration data associated with the stored computer display parameters that most closely match the computer display parameters of the computer system 114. The determination of the closest match may vary and may be implementation specific. In the event of no match, an algorithm may run to make a decision as to the closest match. The algorithm may choose calibration data based on the computer display parameters having, for example, the closest aspect ratio, the closest screen size, or a combination of two or more parameters.

In a step 215, the calibration data for the display parameters of the computer system is calculated in dependence upon the retrieved "closely matched" display parameters. Thus the retrieved calibration data is modified in order to take into account the difference between the "closely matched" display parameters and the actual display parameters. Again, this is implementation specific. However if it is determined that the used calibration data is associated with a screen size which is 10% bigger than a current screen size, for example, the retrieved calibration data may be increased - or scaled - by 10%.

In a step 217 it is then determined whether the thus calculated display parameters are sufficiently accurate. This may be achieved by the system providing the user with the option to accept or reject the calibration data. The system may inform the user, via the displayed images, that they have the choice to accept or reject the calibration data. The user may make the decision following completion of a pre-defined calibration test routine, where a sequence of images/operations particularly designed to demonstrate the accuracy of calibration data are performed.

If it is determined in step 217 that the calibration data is sufficiently accurate, then in a step 219 the thus modified calibration data associated with the "closest match" computer display parameters is applied for system use.

In a further optional step 221 the modified calibration data is stored in the memory 302 with the associated computer display parameters.

If in step 217 it is determined that the calibration provided by the modified calibration data based on the "best match" display parameters is not sufficiently accurate, then the process moves to a step 218.

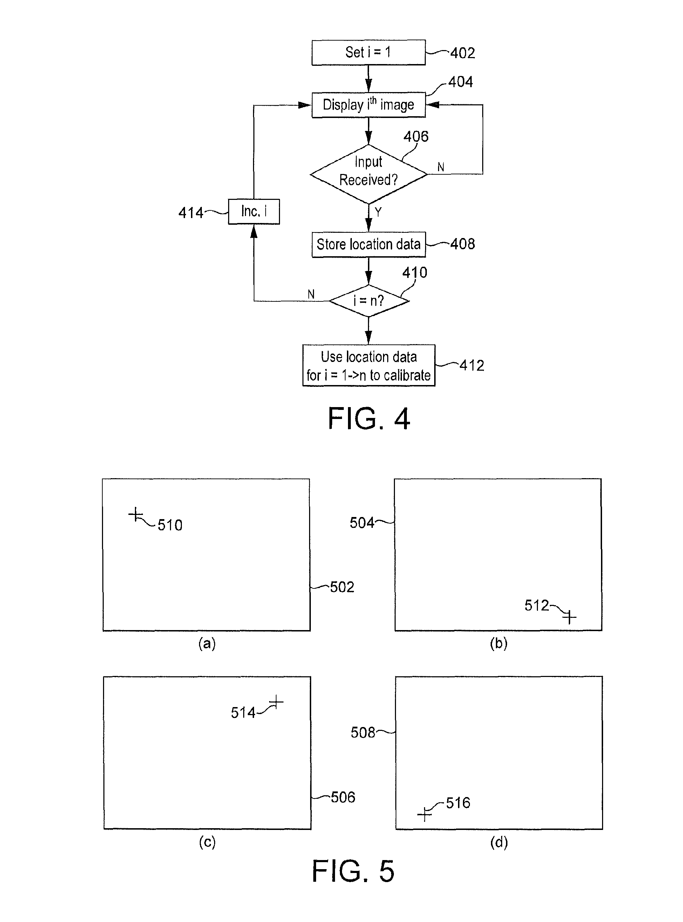

In step 218 a conventional calibration sequence is commenced. Any known calibration sequence suitable for the interactive display system may be used. The calibration sequence is implemented in step 220. An example of a conventional calibration sequence is described hereinafter with reference to Figures 4 and 5.

Also following such a calibration sequence, as described further hereinbelow, in step 222 calibration data is applied, and optionally stored in the calibration data store 328 via communication lines 319, for use in the further operation of the interactive display system.

In addition, and in accordance with a preferred embodiment of the invention, in a step 224 the thus calculated calibration data is stored in the table of the memory 302, together with the associated computer display parameters. Thus the memory interface 326 receives the display parameters on communication line 323 and the calibration data on communication lines 319, and under the control of the controller 320 writes such data into a row of the table stored in the memory 302 via the interface 304.

The functional elements 300 of the computer system 114 are further adapted to implement an appropriate calibration sequence.

With reference to Figure 3, the calibration images store 316 stores a predetermined set of images (or data for generating such images) associated with a calibration sequence. Under the control of the control signals 330 from the controller 320, and as described hereinbelow with reference to Figure 4, the calibration images are sequentially forwarded on communication lines 317 to the display driver 312, for display by the projector 108 on the display surface 102 via communication interface 308. User inputs on the display surface 102 are detected by the interactive display surface, and received by the board interface 310 on a communication interface 306. These user inputs are provided on communication lines 311 to a coordinate detector 314, which provides coordinate information on communication lines 315 to the coordinate store 318.

In the described example, four calibration images are displayed in sequence on the display surface 102 by the projector 108 in order to achieve calibration.

With reference to Figures 4 and 5 (and with further reference to Figure 3), there is now described an exemplary calibration sequence. This is one example of a calibration sequence which may be carried out in steps 218 and 220 of Figure 2.

In a step 402, a parameter i is set to be equal to 1.

In a step 404, the display image of the sequence of calibration images associated with the integer i, in this example the first image, is displayed on the interactive display surface 102. An exemplary such image is illustrated in Figure 5a. The image 502 includes a cursor 510 displayed at a specific location of a display surface. Responsive to the display of such image, a user is required to place the pointing device 104 at the cursor position 510. It should be noted that the images shown in Figure 5 are for purposes of illustrating an example only. In a practical implementation, the image 502 may also include instructions to a user to instruct them to place the pointing device at the cursor location.

In a step 406, the computer 114 determines whether an input has been received from the interactive display surface 102, which input will be received via the board interface 310. If no input is received, then the process reverts to step 404. A time-out may be associated with the process, such that in the event that no input is received within a certain time period then the calibration process time-outs. Techniques for determining location data responsive to detection of the presence of a pointing device at the interactive surface are well-known to one skilled in the art.

In the event that it is determined in step 406 that an input has been received, then in step 408 the location data associated with such input is stored. Thus, the location data is stored in the coordinate store 318.

In a step 410 it is then determined whether the integer i is equal to a value n. In the present example, n is equal to 4, there being four calibration images to be displayed. In the event that i is not equal to n, then the process moves on to step 414. In the described example, as i is currently equal to 1, and n is equal to 4, then the process moves on to step 414 and the value of i is incremented by an integer value, and thus i is increased to 2. The process steps 404, 406 and 408 are then repeated.

With reference to Figure 5, the images to be displayed in association with the values *i* = 2, *i* = 3, and *i* = 4 are displayed in Figures 5b to 5d respectively. As can be seen in Figures 5b to 5d, a respective cursor is displayed in a different position on each image, with a requirement for the user to position the pointing device at the display position of the cursor. In Figure 5b an image 504 displays a cursor 512, in Figure 5c an image 506 displays a cursor 514, and in Figure 5d an image 508 displays a cursor 516.

Thus once the fourth image is displayed as illustrated in Figure 5d, and the appropriate input data retrieved, four sets of coordinate information are stored in the coordinate store 318. In step 410 it is determined that i is equal to n, and the process moves on to step 412.

In step 412 the sets of location data which have been retrieved and stored are used in order to determine calibration data. Thus the four sets of coordinate information stored in coordinate store 318 are passed on communication lines 351 to a calibration calculator 350. As known in the art using the position display data of the cursors and the position input data detected the calibration calculator 350 calculates appropriate offset values in order to determine calibration data, which is then passed on communication lines 319 to the calibration data store 328 to be used by the computer system. During normal operation coordinates from the interactive display surface are calibrated based on the stored calibration data (directly or indirectly using the calculated calibration data) so the cursor display position and the detected input position at the interactive surface coincide. The calibration data may comprise coordinate offsets which are applied to the detected input coordinates to ensure coincidence with the displayed images.

In addition the calculated calibration data on lines 319 is preferably passed to the memory interface 326, and in accordance with step 224 of Figure 2 described hereinabove, delivered to the stored calibration data table of memory 302 in conjunction with the computer display parameters associated therewith.

In this way, the calibration information which has been calculated for the display parameters is made available for future use for retrieval from the memory 302, and in the event that a further computer is connected to the integrated projection system which has a corresponding set of computer display parameters, this calibration data can be retrieved from memory rather than a user having to go through the calibration process.

In the examples described above the calibration data with computer display parameters is stored in a memory external to the computer system. Preferably it is stored in a memory provided with or connected to the interactive display or whiteboard. Further, although the invention has been described in the context of calibration process following the connection of a computer to an interactive display system, the principles of the invention apply also in the event that the computer display parameters of the computer system change in use, for example when the resolution of the computer changes in use.

As previously noted, the embodiments described herein assume a fixed interactive display system in which the geometric parameters of the system do not change. More generally the stored calibration data is associated with system display parameters, which include the computer display parameters and the system geometric parameters. A combination of system display parameters is stored in memory with an associated set of calibration data. Where geometric parameters are included, these may be entered, by a system user, to the computer.

The methods described hereinabove may be implemented on computer software running on a computer system. The invention may therefore be embodied as computer program code being executed under the control of a processor of a computer system. The computer program code may be stored on a computer program product. A computer program product may be included in a computer memory, a portable disk or portable storage memory, or hard disk memory.

The invention is described herein in the context of its application to a computer system forming part of an interactive display system. It will be understood by one skilled in the art that the principles of the invention, and the embodiments described herein, are not limited to any specific interactive display system. The principles of the invention and its embodiments may be implemented in any interactive display system. The invention and its embodiments is not limited to the use of a pointer in combination with an interactive display system, and the invention and its embodiments equally apply to arrangements in which a touch-sensitive type surface arrangement is provided for the interactive display, or any other type of interactive surface is provided.

The invention has been described herein by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. A method for establishing calibration in an interactive display system comprising an interactive display surface and a projector for projecting images onto the interactive display surface, the system being adapted for connection to a computer to receive display data from the computer for display on the interactive display surface via the projector, the method comprising the steps of:
a. determining the display parameters of the interactive display system;
b. accessing stored calibration data;
c. determining if any stored calibration data is associated with display parameters matching the determined display parameters of the interactive system; and
d. in dependence on a match, retrieving and applying the calibration data to thereby calibrate the computer with the interactive display system.

2. The method of claim 1 wherein steps a. to d. are performed either in a connection sequence following connection of a computer to the interactive system, or in response to a change in display parameters of the interactive display system.

3. The method of claims 1 or 2 further comprising the steps, in dependence on no match, of:
e. determining the stored calibration data associated with display parameters most closely matching the determined display parameters of the interactive display system;
f. retrieving the calibration data;
g. modifying the calibration data; and
h. applying the modified calibration data.

4. The method of any preceding claim, wherein the step b. of accessing stored calibration data comprises either accessing a memory associated with the interactive surface, or accessing a memory remote from the interactive surface.

5. A method for establishing calibration in an interactive display system comprising an interactive display surface and a projector for projecting images onto the interactive display surface, the system being adapted for connection to a computer to receive display data from the computer for display on the interactive display surface via the projector, the method comprising the steps of:
a. calibrating the system;
b. determining the display parameters of the interactive display system; and
c. storing the calibration data in association with the display parameters of the interactive display system.

6. The method of claim 5 wherein steps a. to c. are performed either in a connection sequence following connection of a computer to the system, or in response to a change in the display parameters of the interactive display system.

7. The method of claim 5, further comprising, on determination of a change in the computer display parameters, the steps of:
d. determining the new computer display parameters;
e. accessing the stored calibration data;
f. determining if the stored calibration data is associated with system display parameters matching current system display parameters including the new computer display parameters; and
g. in dependence on a match, retrieving and applying the calibration data to thereby calibrate the computer with the interactive display system.

8. The method of claim 7 wherein the determination of a change is responsive to either connection of a new computer to the system, or to a change in the settings of the current computer.

9. A computer for connection to an interactive display system comprising an interactive display surface and a projector for projecting images onto the interactive display surface, the computer being adapted to provide display data for controlling the display of images on the interactive display surface via the projector, the computer further being adapted to calibrate the interactive display system, the computer being adapted to:
a. determine the display parameters of the interactive display system;
b. access stored calibration data;
c. determine if any stored calibration data is associated with display parameters matching the determined display parameters of the interactive system; and
d. in dependence on a match, retrieve and apply the calibration data to thereby calibrate the computer with the interactive display system.

10. The computer of claim 9 further adapted, in dependence on no match, to:
e. determine the stored calibration data associated with display parameters most closely matching the determined display parameters of the interactive display system;
f. retrieve the calibration data;
g. modify the calibration data; and
h. apply the modified calibration data.

11. The computer of claim 9 or claim 10 further adapted, in dependence on no match, to:
i. calibrate the interactive display system.

12. An electronic whiteboard system including a computer according to any one of claims 9 to 11.

13. A computer for connection to an interactive display system comprising an interactive display surface and a projector for projecting images onto the interactive display surface, the computer being adapted to provide display data for controlling the display of images on the interactive display surface via the projector, the computer further being adapted to:
a. calibrate the system;
b. determine the display parameters of the interactive display system; and
c. store the calibration data in association with the display parameters of the interactive display system.

14. The computer of claim 13, further adapted, on determination of a change in the computer display parameters, to:
d. determine the new computer display parameters;
e. access the stored calibration data;
f. determine if the stored calibration data is associated with system display parameters matching current system display parameters including the new computer display parameters; and
g. in dependence on a match, retrieve and apply the calibration data to thereby calibrate the computer with the interactive display system.

15. An electronic whiteboard system including a computer according to claim 13 or claim 14.
